# EUROPEAN PATENT APPLICATION

(11) **EP 2 037 072 A1**
(43) Date of publication of application: **18.03.2009**
(21) Application number: 07116411.5
(22) Date of filing: 14.09.2007
(51) Int. Cl.: E06B 7/23, B23K 26/38, B60J 10/00

(54) **A method for manufacturing tubular seals provided with venting openings**

(71) Applicant: Tecnofive s.r.l., 10019 Strambino (IT)
(72) Inventor: Furno, Davide, 10019, Strambino (IT); Rossi, Marco, 10019, Strambino (IT)
(74) Representative: Gervasi, Gemma

(57) **Abstract**

A manufacturing method of a tubular seal provided with venting openings characterised in that it comprises the operation of making said openings by means of laser.
There is further described a tubular seal obtainable with such method, specifically with openings other than bores.

## Description

### FIELD OF THE INVENTION

The present invention relates to a method for manufacturing ubular seals with venting openings.

### PRIOR ART

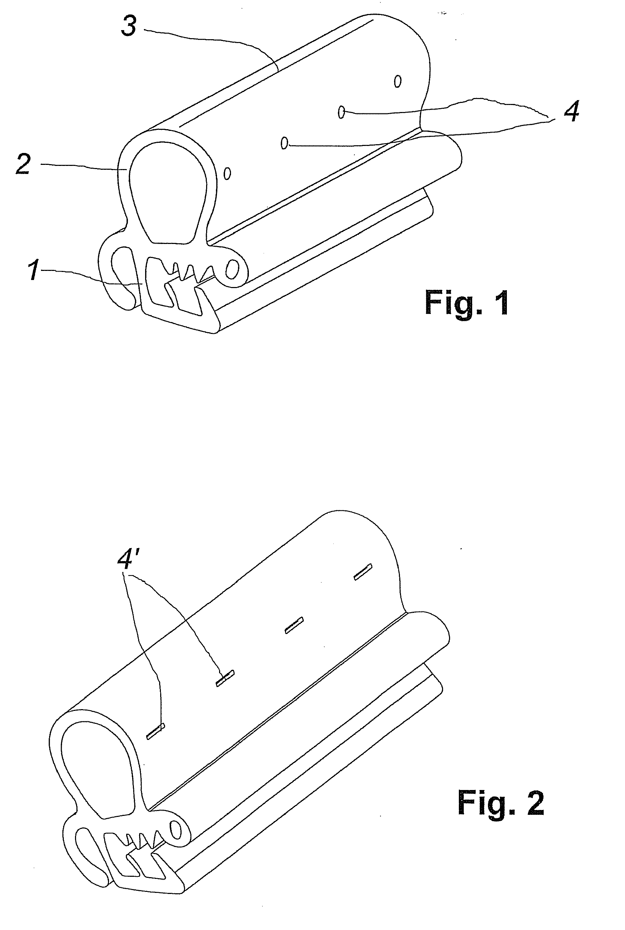

Tubular seals are commonly used for ensuring the sealing, when closed, of doors or windows, specially of the type comprising a leaf or pane hinged on one side, or which however are non-slidingly drawn against the jamb onto which they are sealed. Such seals are used in the field of constructions, or in the vehicle industry. The seal may be, for example, fixed by means of specific means onto the perimeter of the hatch, or, more commonly, along the jamb onto which the hatch is sealed. An example of application is the pivot-opening window of certain vehicles, e.g. side rear windows of two-door cars. The seal is generally fixed to the car chassis at the opening, and the glass, hinged on one side, is pressed closed on the seal, thus ensuring sealing. By being squeezed, the tubular profile ensures an appropriate sealing, without bending to one side, and allows a considerable squeezing without opposing an excessively high mechanical resistance. Figure 1 shows a section of tubular seal of the known type. It comprises a part 1 structured for fixing the seal, in this case to the chassis of a car at a window; the structure of this part depends on the features of the element onto which the seal is intended to be fixed. The seal further comprises a tubular part 2, intended to seal onto the opening window, which is drawn against it by resting along line 3 and compressing the seal in the direction of part 1. A series of bores 4 are made in the tubular part, in appropriate position and appropriately distanced, to ensure the passage of air in the two directions, so that the seal may be freely compressed and expand resuming its shape, when it is relieved by opening the window. Indeed, if the employed seal segments are long and/or secured to other segments or structures, the passage of air at the end may be either impossible or insufficient.

The seals of this type are commonly made of rubber or thermoplastic material, and are continuously extruded. The bores may be made on line after extrusion and after possible vulcanisation, e.g. before cutting. Metal tips which turn at fast speed are commonly used and the bores are made in sequence on the seal which travels through the machinery.

Although it may be performed using a very simple machinery, this machining method is not entirely satisfactory from the result point of view and also generates problems of machinery management.

The drills must often be replaced, with the need to stop the machinery; furthermore, their wear progresses through their entire working life, with the possibility of making many imperfect bores or that some of the bores are missing, even before the need for a replacement is detected, and rework operations are therefore needed on the finished product. Imperfections are however frequent also with new drills. Events such as those discussed occur even on a daily basis with this type of machining and the quality of the machining is mediocre. All of this is worsened by the need in a continuous production process, to ensure an adequate productivity rate.

The use of rotating drills also generates swarfs which may remain inside the seal. Blowing operations may thus be needed to remove them.

### SUMMARY

The problems outlined above have been solved according to the present invention by a method for manufacturing a tubular seal provided with venting openings characterised in that it comprises the operation of making said openings by means of laser.

The invention also relates to a seal obtainable with the method outlined above.

A venting opening means any through opening (slit, incision, bore) of appropriate dimension for the intended purpose, which dimension may also be chosen according to the concentration of holes along the seal, so as not to compromise the other functions of the product (e.g. mechanical resistance).

The object of the invention is specifically contained in the accompanying claims.

### LIST OF FIGURES

The present invention will now be illustrated by means of the detailed description of preferred, but not exclusive, embodiments provided by way of example only, with the aid of the accompanying figures, in which:
figure 1 diagrammatically shows a perspective view of a segment of tubular seal, obtainable according to the known art, already discussed above;
figure 2 diagrammatically shows a perspective view of a tubular seal segment, according to a possible embodiment of the invention;
figure 3 diagrammatically shows a perspective view of a part of a manufacturing system of a tubular seal in which the openings are made, by means of the method according to a particular embodiment of the invention.

### DETAILED DESCRIPTION OF AN EMBODIMENT

The method according to the present invention contemplates the use of a laser for making a series of openings in the wall of a tubular seal. As seen, the tubular seals under examination preferably have a constant transversal section along a longitudinal axis, and present a tubular part, and preferably a fixing part; according to a preferred embodiment, they are obtained by extrusion. However, the method may also be applied to tubular seals of other types, also with non-constant cross section (e.g. for the presence of overhangs or other). The openings at issue, connecting the inside of the tubular part with the outside, may be bores, of shape corresponding to that obtained with drills, although they may be made without the production of rejects or swarfs and with a sharper slit; indeed, the formation of the openings occurs by burning the material. They may even be slits, i.e. openings such as those shown in figure 2 with reference 4', having an elongated shape or other types of openings. An advantage of the present invention is indeed the possibility that the venting openings may have different shapes than the bores, i.e. cylindrical openings or at the most conical openings obtainable by drilling by means of drills. For example, simple slits or incisions or openings formed by several reciprocally crossed slits are particularly advantageous because they tend to open under the effect of the different pressure, between the inside and the outside, allowing the passage of air, while they tend to close by effect of the elasticity of the seal once balance has been re-established. In such manner, they offer a minimum clearance for the passage of foreign bodies or water, reducing the possibility of these penetrating inside.

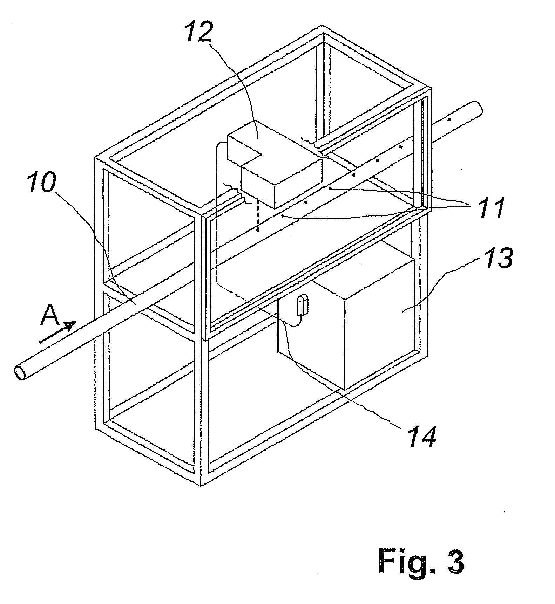

The method according to the present invention may be performed with any type of apparatus adapted to the material of the manufactured seals. In the case of rubber or thermoplastic material (e.g. PVC) commonly used for seals, a particularly preferred type of laser is the CO₂ laser. The openings may be made in series on the seal while this advances along the production line, e.g. after extrusion and before cutting. Figure 3 diagrammatically shows the apparatus in which the aforesaid operation is performed. It is possible to observe seal 10 while it advances in the direction of arrow A, in virtue of specific guiding or drawing systems. Openings 11 are made by laser source 12 at regular intervals. The apparatus may comprise control unit 13 adapted to control the laser source, e.g. by means of a connection 14. If desired, the laser source may be directed so as to perform the opening as desired on the moving part; the control unit and however the laser source operation may be advantageously programmable. In such manner, the various types of operation may be performed on one same line.

The laser apparatus may be of the known type and of appropriate power. By way of example only, a CO₂ laser source with a nominal power of 115 W was used for a car window tubular seal, but the choice may be different, and otherwise adapted to the required type of machining.

The laser source may further contain pointing systems, optical or of other types, such as systems for marking the working area, for example other types of laser may be comprised, and it may also contain cooling systems and other. It may be provided with beam orientation means also adapted to the movement thereof during application onto the blank, so as to adapt the application in space and time, following the movement of the part in the machinery.

The advantages of the present invention include the fact that the laser components generally have a very long life, during which it has been found that no imperfect machining occurs, therefore machine downtime and rework operations are avoided until the replacement of a component is however needed. Furthermore, as seen, other machining than the opening of simple bores is possible, and it is further possible to make also non-aligned openings or openings on different planes, by adjusting the laser application time and the beam orientation during the application.

## Claims

1. A method for manufacturing a tubular seal provided with venting openings (4', 11), **characterised in that** it comprises the operation of making said holes by means of laser (12).

2. A method according to claim 1, wherein said seals are made of rubber or thermoplastic material.

3. A method according to any preceding claim, wherein the laser is a CO₂ laser.

4. A method according to any preceding claim, wherein the openings are bores.

5. A method according to any preceding claim, wherein the openings are slits.

6. A method according to any preceding claim, wherein the openings comprise several reciprocally crossed slits.

7. A method according to any preceding claim, wherein the seal is obtained by extrusion.

8. A method according to any preceding claim, wherein the openings are made in sequence in a seal which proceeds continuously in a manufacturing machine, before cutting the same into portions of appropriate length.

9. A tubular seal with venting openings obtainable with a method according to any preceding claim.

10. A tubular seal according to claim 9, wherein said openings are slits or comprise several reciprocally crossed slits.

11. A tubular seal according to claim 9 to 10 adapted to seal windows or vehicle windows.
